# EUROPÄISCHE PATENTSCHRIFT

(11) **EP 2 611 715 B1**
(45) Veröffentlichungstag und Bekanntmachung des Hinweises auf die Patenterteilung: **18.03.2015**
(21) Anmeldenummer: 11732448.3
(22) Anmeldetag: 14.07.2011
(51) Int. Cl.: B65G 1/137

(54) **PICK-TO-WINDOW**
PICK TO WINDOW
MODE DE PRÉPARATION "PICK-TO-WINDOW"

(30) Priorität: 02.09.2010 DE 102010044614
(43) Veröffentlichungstag der Anmeldung: 10.07.2013
(73) Patentinhaber: SSI Schäfer Noell GmbH Lager-und Systemtechnik, 97232 Giebelstadt (DE)
(72) Erfinder: ISSING, Elmar, 97232 Giebelstadt (DE)
(74) Vertreter: Witte, Weller & Partner Patentanwälte mbB
(86) Internationale Anmeldenummer: PCT/EP2011/062019
(87) Internationale Veröffentlichungsnummer: WO 2012/028371

(56) Entgegenhaltungen:
- WO-A1-96/36547
- WO-A1-2005/113389
- DE-A1-102004 014 378
- DE-A1-102007 034 705
- FR-A1- 2 713 612

## Beschreibung

Die vorliegende Erfindung betrifft einen Kommissionier-Arbeitsplatz mit Fensterförderer, eine Lager- und Kommissionieranlage mit einem derartigen Kommissionierarbeitsplatz und ein Verfahren zum manuellen, beleglosen Kommissionieren von Stückgütern gemäß einem aus mindestens einer Zeile bestehenden Kommissionierauftrag. Es wird dabei nach dem Prinzip "Mann-zur-Ware" kommissioniert.

Die FR 2 713 612 A1 offenbart den Oberbegriff des Anspruchs 1.

Weiterer Stand der Technik ist in den Dokumenten WO 2005(113389 A1, DE 10 2004 014 378 A1, WO 96/36547 A1 und DE 10 2007 034 705 A1 zu finden.

Timm Gudehus beschreibt in seinem Buch "Logistik" (Springer Verlag, 2004, ISBN 3-540-00606-0) unter dem Begriff "Pick-to-Belt" ein Kommissionierverfahren, bei dem dezentral, mit statischer Artikelbereitstellung, kommissioniert wird. Beim dezentralen Kommissionieren haben Bereitstelleinheiten (z.B. Lagerbehälter) einen festen Platz. Eine Kommissionierperson bewegt sich zum Kommissionieren in einem (dezentralen) Arbeitsbereich, in dem sich eine bestimmte Anzahl von Zugriffsplätzen befindet. Kommissionieraufträge laufen mit oder ohne Sammelbehälter nacheinander auf einer Fördertechnik entsprechende Kommissionierzonen (Arbeitsbereich des Kommissionierers) an. Unter einem Auftrag bzw. Kommissionierauftrag versteht man beispielsweise eine Kundenbestellung, die sich aus einer oder mehreren Auftragspositionen (Auftragszeilen) mit einer jeweiligen Menge (Entnahmemenge) eines Artikels zusammensetzt. In den Kommissionierzonen halten die Aufträge an, bis geforderte Artikelmengen entnommen und abgelegt sind. Danach kann der Auftrag ggf. zu einem nachfolgenden Kommissionierer fahren, der eine stromabwärts angeordnete Kommissionierzone zur Abarbeitung nächster Auftragszeilen bedient. Vorteile des dezentralen Kommissionierens sind: kurze Wege und kontinuierliches Arbeiten; keine Rüstzeiten und Wartezeiten an einer zentralen Basis; sowie eine höhere Pickleistung der Kommissionierpersonen. Deshalb wird bei "Pick-to-Belt" häufig auch als Batch-Picking betrieben, d.h. möglichst viele Kundenaufträge, die einen bestimmten Artikeltyp enthalten werden zusammengefasst, so dass der Kommissionierer diesen Artikeltyp für alle Kundenaufträge entnimmt. Das reduziert die Laufwege des Kommissionierers, erfordert aber in der Regel eine individualisierende Markierung ("Labeln") der entnommen Artikel, damit ein nachgeschalteter Sorter die Artikel auf die jeweiligen Kundenaufträge verteilen kann. Der Kommissionierer kann jeden entnommen Artikel z.B. mit einem Klebeetikett markieren und dann auf ein Band legen, welches keine "Fenster" aufweisen muss. Das Labeln ist arbeitsintensiv und verlangsamt den Kommissionierungsprozess.

Ein anderes Kommissionierverfahren bzw. -leitsystem wird mit "Pick-by-Light" (Quelle: Wikipedia) bezeichnet. Pick-by-Light bietet signifikante Vorteile gegenüber klassischen, manuellen Kommissioniertechniken, welche das Vorliegen von Lieferscheinen oder Rechnungen zum Zeitpunkt der Kommissionierung erfordern. Bei Pick-by-Light-Systemen befindet sich an jedem Zugriffsplatz eine Signallampe mit einem Ziffern- oder auch alphanumerischen Display sowie mindestens eine Quittierungstaste und eventuell Eingabe- bzw. Korrekturtasten. Wenn der Auftragsbehälter, in den hinein die Artikel aus z.B. Lagerbehältern abgelegt werden, an einer Kommissionierposition ankommt, so leuchtet an demjenigen Zugriffsplatz, aus welchem die Artikel bzw. Stückgüter zu entnehmen sind, eine Signallampe auf und auf dem Display erscheint die zu entnehmende Anzahl. Die Entnahme wird dann mittels einer Quittiertaste bestätigt und die Bestandsänderung kann in Echtzeit an ein Lagerverwaltungssystem zurückgemeldet werden. Meistens arbeiten Pick-by-Light-Systeme nach dem Prinzip "Mann-zur-Ware".

Des Weiteren ist eine beleglose Kommissionierung mittels "Pick-by-Voice" bekannt (Quelle: Wikipedia). Dort findet eine Kommunikation zwischen einer Datenverarbeitungsanlage und der Kommissionierperson mittels Sprache statt. Anstatt ausgedruckter Kommissionierlisten oder Datenfunkterminals (d.h. mobile Datenerfassungseinheiten, MDE) arbeitet die Kommissionierperson z.B. mit einem Headset (Kopfhörer und Mikrophon), welches z.B. an einen handelsüblichen Pocket-PC angeschlossen werden kann. Die Aufträge werden von einem Lagerverwaltungssystem mittels Funk, meist WLAN/WiFi, an die Kommissionierperson übermittelt. Üblicherweise umfasst eine erste Sprachausgabe das Regal, aus welchem Stückgüter entnommen werden sollen. Ist die Kommissionierperson dort angelangt, kann sie eine am Regal angebrachte Prüfziffer nennen, die es dem System erlaubt, eine Überprüfung vorzunehmen. Wurde die richtige Prüfziffer genannt, wird der Kommissionierperson in Form einer zweiten Sprachausgabe eine Entnahmemenge genannt. Wenn das Regal mehrere Zugriffsplätze aufweist, bekommt die Kommissionierperson selbstverständlich auch den konkreten Zugriffsplatz in Form einer Sprachausgabe genannt. Nach einer Entnahme des zu kommissionierenden Stückguts bzw. der zu kommissionierenden Stückgüter quittiert die Kommissionierperson diesen Vorgang mittels Schlüsselwörtern, die von einer Datenverarbeitungseinrichtung mittels Spracherkennung verstanden werden.

Neben den manuellen Kommissionierverfahren gibt es auch automatisierte Kommissionierverfahren. Zu diesem Zweck werden z.B. Kommissionierautomaten eingesetzt. Ein exemplarischer Kommissionierautomat ist ein sog. "A-Frame", wie er exemplarisch in der US 5,271,703 B beschrieben ist. Ein A-Frame weist ein Grundgestell mit einem A-förmigen Querschnitt auf. Durch die Beine des A-förmigen Querschnitts läuft ein sog. Fensterband. Das Fensterband ist üblicherweise ein endlos umlaufender Gurtbandförderer, dessen Gurtband bzw. die durch das Gurtband definierte Förderfläche virtuell in eine Vielzahl von Fenstern aufgeteilt wird. Üblicherweise ist ein Fenster ein Bereich auf dem Förderer, der 1 - 2 m lang ist und sich über die gesamte Breite des Gurtbands erstreckt. Das Fensterband wird vorzugsweise kontinuierlich durch die A-förmigen Beine des A-Frames bewegt. Ein Auftrag ist, je nach seinem Umfang, einem einzigen oder mehreren Fenstern zugeordnet. Wenn ein Fenster bzw. ein Auftrag einen Artikelschacht passiert, der auf einer der Seiten des A-Frames montiert ist, können mittels eines am unteren Ende jedes Schachts vorgesehenen Auswerfers ein oder mehrere Artikel gemäß dem gerade den Schacht passierenden (Fenster bzw.) Auftrag ausgeworfen werden. Die Aufträge werden den Fenstern von einem Auftragsabwicklungssystem zugewiesen, und zwar bevor die Fenster durch den A-Frame laufen. Man spricht in diesem Zusammenhang auch von "Fenstertechnik".

Das Auftragsabwicklungssystem ist üblicherweise in eine Kommissioniersteuerung integriert, die z.B. auch ein Warenwirtschaftssystem aufweisen kann. Die Kommissioniersteuerung kann ferner eine (Lager-)Platzverwaltung sowie eine Informationsanzeige integriert haben. Die Kommissioniersteuerung wird üblicherweise durch eine Datenverarbeitungsanlage realisiert, die vorzugsweise zur verzögerungsfreien Datenübertragung und Datenverarbeitung im Online-Betrieb arbeiten kann.

Eine Kombination von A-Frame und Fenstertechnik ist zwar möglich, aber nur für ganz wenige Auftragsstrukturen geeignet. Eine geeignete Auftragsstruktur zeichnet sich durch möglichst wenige Zeilen pro Auftrag aus, wobei die Zeilen aus größeren Mengen von Artikeln der gleichen Sorte bestehen. Üblicherweise werden A-Frames für A-Artikel bzw. sog. Schnelldreher eingesetzt. A-Artikel haben eine hohe Absatzmenge, Umschlagrate bzw. Zugriffshäufigkeit. Auf der Seite der Kommissioniersteuerung wird ein hoher Aufwand betrieben, um die Fenster vorab Aufträgen zuzuordnen, d.h. lange bevor die Fenster bzw. Aufträge in den eigentlichen Kommissionierbereich, wie z.B. zwischen die Beine des A-Frames, kommen.

Die Fenstertechnik ist eigentlich nur für die Kommissionierung von geometrisch kleinen Artikeln, wie z.B. Arzneimitteln und Medikamenten, sinnvoll. Der Einsatz der Fenstertechnik bei der Kommissionierung von Stückgütern mit größeren Dimensionen oder bei hohen Stückzahlen wird üblicherweise nicht praktiziert, weil die Fenstergröße, insbesondere die Fensterlänge, zu lang wird, wenn alle Stückgüter, die zu einem Kommissionierauftrag gehören, in Form eines "Haufens" auf ein einziges Fenster kommissioniert werden sollen.

Ein weiteres Problem ist darin zu sehen, dass es vorkommen kann, dass (z.B. mengenmäßig) nicht alle Stückgüter zum Vervollständigen des Kommissionierauftrags, d.h. eines Fensters, vorhanden sind.

Wenn eine Kommissionierperson manuell in ein Fenster, und zwar unabhängig von der Größe des Fenster, kommissioniert, bestehen Probleme. Zum einen kann nicht sicher gewährleistet werden, dass die Kommissionierperson ein entnommenes Stückgut tatsächlich in das zuvor dem Auftrag zugeordnete Fenster ablegt. Das Ablegen eines entnommenen Stückguts ist schwierig, wenn sich das Fensterband kontinuierlich bewegt. Das Ablegen wird um so schwieriger, je schneller sich das Fensterband bewegt. Außerdem ist es schwierig, der Kommissionierperson genau jenes Fenster zu signalisieren, in welches sie das entnommene Stückgut gerade ablegen soll. Zwar wäre es möglich, die Fenster mit fortlaufenden Nummern zu bedrucken und der Kommissionierperson die dem Auftrag zugeordnete Fensternummer entweder optisch anzuzeigen oder akustisch anzugeben. Hier besteht aber immer die Gefahr, dass die Kommissionierperson diese Information über den Zielort, d.h. das Ziel-Fenster, in welches das entnommene Stückgut abzulegen ist, auf dem (Lauf-)Weg zum Ziel-Fenster vergisst oder das Fenster verwechselt. Besonders bei einer fortlaufenden Nummerierung besteht die Gefahr, dass die Kommissionierperson vermeintlich zu wissen meint, wo sich das Ziel-Fenster gerade befindet, und trotzdem bzw. gerade deswegen in ein falsches Fenster ablegt.

Wenn mehrere manuelle Kommissionierplätze hintereinander stromabwärts angeordnet sind und von ein und demselben Fensterförderer durchquert werden, pflanzen sich die aus einer stromaufwärts erfolgten Fehlpositionierung ergebenden Probleme stromabwärts fort und verstärken sich mitunter sogar. Wenn ein erster Kommissionierer in einer ersten Kommissionierzone, die weit stromaufwärts liegt, ein Stückgut in ein falsches Fenster abstellt, kann es bei einer entsprechenden Fenstergröße vorkommen, dass ein weiter stromabwärts positionierter, zweiter Kommissionierer sein Stückgut nicht in das diesem Stückgut zugewiesene Fenster ablegen kann, weil dort bereits das Stückgut des ersten Kommissionierers liegt. In diesem Fall kann das gerade abzulegende Stückgut entweder gar nicht oder nur in ein anderes falsches Fenster abgelegt werden. Im letzten Fall potenzieren sich die Fehler also.

Der weiter stromabwärts positionierte Kommissionierer muss dem für einen Materialfluss verantwortlichen Rechner dann signalisieren, dass eine Fehlkommissionierung stattgefunden hat. Derartige Fehlkommissionierungen sind nahezu nicht korrigierbar. Der Kommissionierauftrag des stromabwärts positionierten Kommissionierers kann nicht erledigt werden. Das falsch positionierte Stückgut muss ausgesondert werden. Der zum ausgesonderten Stückgut gehörende Kommissionierauftrag muss bestimmt werden. Dieser Kommissionierauftrag ist somit ebenfalls nicht erledigt. In Abhängigkeit vom Umfang der Fehlkomrnissionierung sind möglicherweise noch weitere Kommissionieraufträge betroffen. Die nicht erledigten Kommissionieraufträge müssen neu geplant werden, indem die falsch abgelegten Stückgüter entfernt und zurückgeführt werden und die nicht erledigten Kommissionieraufträge neuen Fenstern zugewiesen werden, die dann erneut durch das Kommissioniersystem laufen müssen.

Es ist daher eine Aufgabe der vorliegenden Erfindung, die oben erwähnten Probleme bei einer manuellen Kommissionierung, bei der die Fenstertechnik eingesetzt wird, zu überwinden.

Diese Aufgabe wird mit einem Arbeitsplatz nach Anspruch 1 gelöst. Die Codierung ist vorzugsweise chaotisch, d.h. nicht fortlaufend im Sinne von 1., 2, 3, ... usw.

Zur Zuweisung der Fensterplätze zu Aufträgen bzw. Zeilen ist es erforderlich, dass der Kommissionierer jeden Fensterplatz eindeutig identifizieren kann, damit es zu keinen Fehlzuordnungen kommt. Der Code kann z.B. durch eine fortlaufende Nummerierung aneinandergrenzender Fensterplätze implementiert sein. Bei einer fortlaufenden Nummerierung läuft man aber Gefahr, dass der Kommissionierer bereits erahnt, welcher Fensterplatz sich gerade seinem aktuellen Standort nähert. Damit erhöht sich aber die Gefahr, dass der Kommissionierer vermeintlich zu wissen meint, welches der Fensterplätze frei ist. Er sieht zwar, dass z.B. der Fensterplatz "12-03" frei ist, kontrolliert aber den Fensterplatz-identifizierenden Code nicht mehr, sondern zeigt der Kommissioniersteuerung den vermeintlich richtigen Code an, ob das freie Fenster tatsächlich den nächst höheren Code "12-04" trägt, weil sich der Kommissionierer z.B. beim Abzählen der Fenster bis zum nächsten freien Fenster vertan hat. Wenn die Codierung hingegen chaotisch ist, z.B. in Form einer zufälligen Ziffer (z.B. "11-03", "05-01" und dann "07-01") für jeden Fensterplatz, wobei vorzugsweise keine Ziffer doppelt vergeben wird, kann dieses Risiko ausgeschlossen werden. Der Kommissionierer muss immer explizit nachprüfen, d.h. ablesen, welche Code ein freier Fensterplatz tatsächlich trägt. Damit reduzieren sich die Fehlerquote, und somit auch das Erfordernis, falsch kommissionierte Aufträge bzw. Zeilen nachkommissionieren zu müssen.

Anders als im Stand der Technik erfolgt die datentechnische Verknüpfung eines Kommissionierauftrags, und insbesondere einer Auftragszeile, mit einem Fensterplatz (nachfolgend auch kurz "Fenster" genannt) erst nachdem der Fensterförderer in einen Kommissionierbereich, der eine Vielzahl von Kommissionierzonen aufweisen kann, gelangt ist. Die Zuweisung mindestens einer Auftragszeile an mindestens einen Fensterplatz erfolgt also direkt vor Ort, wo die Kommissionierperson (nachfolgend auch als "Kommissionierer" bezeichnet) tatsächlich arbeitet. Eine übergeordnete (Kommissionier-) Steuerung hat also, wenn der Fensterförderer in den Kommissionierbereich einer Lager- und Kommissionieranlage eintritt noch keine Kenntnis davon welcher Fensterplatz des Fensterförderers welchem Auftrag bzw. welcher Zeile zugeordnet wird. Es bleibt vollkommen dem Kommissionierer überlassen, auf welchen Fensterplatz er einen oder mehrere gegriffene Stückgüter in Übereinstimmung mit einer angegebenen Entnahmemenge ablegt, solange dieser Fensterplatz frei ist und ausreichend Raum zur Aufnahme des oder der gegriffenen Stückgüter bietet. Ein Fensterplatz ist frei, wenn dort zuvor kein Stückgut eines anderen Auftrags oder einer anderen Auftragszeile abgelegt wurde, und somit zuvor auch keine Zuweisung dieses Fensterplatzes zu einer Auftragszeile stattgefunden hat.

Der Kommissionierer muss sich beim Ablegen der Stückgüter weniger stark konzentrieren, weil es ihm überlassen bleibt, in welches freie Fenster er ablegt. Er kann frei zwischen nicht bereits belegten Fensterplätzen wählen und muss so nicht einen durch die übergeordnete Steuerung vorgegebenen Fensterplatz abpassen. Auf diese Weise wird verhindert, dass der Kommissionierer gegriffene Stückgüter fälschlicherweise in ein Fenster ablegt, welches bereits einem anderen Koznmissionierauftrag zugewiesen ist. Dadurch wird wiederum verhindert, dass korrigierend nachkommissioniert werden muss, d.h. falsch abgelegte Stückgüter entfernt und die dazugehörigen Aufträge bzw. Zeilen neu zugeteilt werden. Der Kommissionierer muss sich auch deshalb weniger konzentrieren, weil er nicht ein zuvor durch die Kommissionsteuerung bestimmtes Fenster auf dem Fensterförderer finden muss. Er sucht sich einfach das nächstbeste, freie Fenster aus.

Die Fensterplätze sind optisch von einander klar und einfach unterscheidbar. Virtuelle Fenster kann der Kommissionierer nicht sehen, so dass in diesem Fall die Gefahr besteht, dass der Kommissionierer in ein "falsches" Fenster ablegt. Durch eine optisch sichtbare Markierung der einzelnen Fenster ist es dem Kommissionier jederzeit klar, wo ein Fenster anfängt und wo es wieder endet.

Vorzugsweise weist die Kommissioniersteuerung ein Pick-by-Voice-Kommissionierleitsystem (nachfolgend auch "Pick-by-Voice-System" abgekürzt) auf, das eingerichtet ist, der Kommissionierperson akustisch den durch die Auftragszeile bestimmten Zugriffsplatz und die Entnahmemenge zu vermitteln, und das eingerichtet ist, die Zuweisung des freien Fensterplatzes mittels Spracheingabe durch die Kommissionierperson an die Kommissioniersteuerung zu vermitteln.

Unter einem Kommissionierleitsystem wird nachfolgende ein System verstanden, das aus Hardware- und/oder Softwarekomponenten gebildet ist und eine Kommissionierstrategie in die Realität abbildet, wobei das System einen Kommissionierer durch die Anlage führt, um ihm mitzuteilen, wo er welches Stückgut in welcher Anzahl entnehmen kann und wo er die entnommen Stückgüter wiederum abzulegen hat. Die einzelnen Komponenten können über die gesamte Lager- und Kommissionieranlage verteilt angeordnet sein. Je nach Ausführung können Komponenten in eine Kommissioniersteuerung, wie sie nachfolgend noch genauer beschrieben werden wird, integriert sein oder Teil einer Lagereinheit (z.B. eines Regals) oder Teil der technischen Ausrüstung (z.B. Headset oder Handheld-Terminal) des Kommissionierers sein.

Das Kommissionieren mit einem Pick-by-Vvice-System hat den Vorteil, dass der Kommissionierer seine Hände ausschließlich zum Greifen und Ablegen gebraucht. Weder muss der Kommissionierer Quittiertasten zum Bestätigen eines abgeschlossenen Auftrags oder einer abgeschlossenen Zeile drücken, noch muss der Kommissionierer andere Informationen händisch an eine übergeordnete Kommissioniersteuerung übermitteln. Das Pick-by-Voice-System ist außerdem für Mitarbeiter geeignet, die unterschiedliche Sprachen sprechen. Aushilfsarbeiter und angelernte Arbeiter kommen schnell mit einem Pick-by-Voice-System zurecht, da das System auf Sprache basiert und somit selbsterklärend sein kann. Der Kommissionierer muss lediglich die Sprachbefehle lernen, um z.B. die Abarbeitung eines Auftrags oder einer Zeile akustisch an die Kommissionsteuerung zu übermitteln.

Ein weiterer Vorteil des Pick-by-Voice-Systems ist darin zu sehen, dass der Kommissionierer Fensterplatz-identifizierende Merkmale (Codes), wie z.B. einen alphanumerischen Code, einen Farbcode, einen Symbolcode oder Ähnliches, mittels Spracheingabe an die Kommissioniersteuerung übermitteln kann. Alternativ können natürlich auch Scanner oder ähnliche Code-Lesegeräte eingesetzt werden, um die Merkmale, die einen Fensterplatz eindeutig identifizieren, einzulesen und zu übermitteln.

Alternativ zum Pick-by-Voice-System kann die Kommissioniersteuerung ein Pick-by-Light-Kommissionierleitsystem (nachfolgend auch kurz "Pick-by-Light-System" genannt) aufweisen, das eingerichtet ist, jeden der Zugriffsplätze mittels einer optischen Anzeige zu aktivieren und zu desaktivieren und ferner die Entnahmemenge optisch anzuzeigen. Dies kann am Ort des jeweiligen Zugriffsplatzes oder dezentral erfolgen.

Ein Vorteil einer Führung des Kommissionierers mittels Pick-by-Light ist, dass Zugriffsfehler nahezu zu 100% unterbunden werden können. Der Zugriffsplatz, von dem gerade momentan Stückgüter zu entnehmen sind, leuchtet z.B. als einziger unter einer Vielzahl von Zugriffsplätzen auf. Der Kommissionierer wird also zielsicher zum entsprechenden Zugriffsplatz geführt. Am Zugriffsplatz bekommt er die zu entnehmende Menge von Stückgütern am Zugriffsplatz z.B. mittels einer optischen Zifferanzeige (LED oder Ähnliches) angezeigt.

Die Zuweisung Fensterplatz zum Auftrag oder zur Zeile kann, wenn ein Pick-by-Light-System zum Anzeigen der Zugriffsplätze eingesetzt wird, z.B. mit einem Handscanner erfolgen, mit dem bspw. ein auf dem Fensterplatz abgedruckter Strichcode eingelesen wird.

Es versteht sich, dass das Pick-by-Light-System auch mit dem Pick-by-Voice-System kombiniert werden kann. In diesem Fall kann z.B. der Zugriffsplatz optisch (Pick-by-Light) angezeigt bzw. vermittelt werden. Die Zuweisung des freien Fensterplatzes könnte akustisch (Pick-by-Voice) erfolgen.

Bei einer weiteren vorteilhaften Ausgestaltung ist jeder der Fensterplätze an einer beliebigen Stelle mit einem Marker (z.B. am Fensteranfang oder -ende mit einem metallischer Stift oder Streifen, einem aufgedruckten Barcode, einem aufgeklebten oder eingewebten Transponder, etc.) versehen, der einen Ort eines jeden Fensterplatzes eindeutig relativ zum gesamten Fensterförderer darstellt.

Damit ist eine Kalibrierung bzw. Referenzierung der Fensterplätze möglich. Ein entsprechender Sensor kann z.B. am Anfang und/oder Ende des Fensterförderers vorgesehen sein, um einen Versatz des Fensterplatzes, z.B. durch Schlupf eines Gurtbands, während eines Durchlaufs des Fensterförderers durch den Kommissionierbereich erfassen zu können. Damit ist gewährleistet, dass die Kommissioniersteuerung jederzeit Kenntnis davon hat, welcher Fensterplatz sich gerade an welchem Ort befindet. Diese Information kann von der Kommissioniersteuerung verfolgt ("Tracking") werden, d.h. an beliebigen Orten im Materialfluss überprüft werden. So ist z.B. gewährleistet, dass nachfolgende Förderkomponenten im Falle einer Übergabe zwischen Förderkomponenten Kenntnis davon haben, was sie gerade transportieren. Die datentechnische Verknüpfung der abgelegten Stückgüter mit dem Fenster, in oder auf das sie abgelegt werden, die wiederum beim Kommissionieren festgelegt wird, wird stromabwärts beibehalten. Zusätzlich hat die Kommissioniersteuerung vorzugsweise auch Kenntnis von der Fördergeschwindigkeit des Fensterförderers, einer jeweiligen Größe (Breite und Länge) eines jeden Fensterplatzes und der Betriebsweise des Fensterförderers (z.B. getaktet oder kontinuierlich) und Ähnlichem.

Wie bereits oben erwähnt, kann die Einrichtung zum Zuweisen eines freien Fensterplatzes eine automatisierte Code-Leseeinheit, wie z.B. einen Handscanner oder Ähnliches, umfassen.

Auch durch diese Maßnahme reduziert sich die Fehlerquote. Der Kommissionierer muss zum Zwecke einer Zuweisung des freien Fensterplatzes zu einer Auftragszeile zum freien Fensterplatz laufen, um dessen identifizierenden Code einlesen zu können. Da das Einlesen automatisiert erfolgt, können falsch abgelesene Fensterplatzidentifizierungen sicher ausgeschlossen werden. Die Zuweisung eines freien Fensterplatzes zu einer Auftragszeile ist somit fehlerfrei.

Die Einrichtung zum Zuweisen freier Fensterplätze kann auch durch eine Quittiertaste realisiert sein.

Der Einsatz einer Vielzahl von Quittiertasten macht sich insbesondere beim Einsatz eines Pick-by-Light-Kommissionierleitsystems vorteilhaft bemerkbar. Dazu können die Quittiertasten beispielsweise in den Seitenwangen des Fensterförderers in, vorzugsweise regelmäßigen, Abständen angeordnet sein. Der Kommissionierer greift eine angezeigte Menge von Stückgütern aus einem angegebenen Zugriffsplatz und legt die gegriffenen Stückgüter auf den nächsten freien Fensterplatz ab, der sich auf Höhe einer Quittiertaste befindet. Die Kommissioniersteuerung registriert das Betätigen der Quittiertaste. Die Kommissioniersteuerung hat in diesem Fall auch Kenntnis darüber, welches Kommissionierfenster sich gerade am Ort der betätigten Quittiertaste befindet und vollzieht so die Zuweisung "Fensterplatz - Auftrag/Zeile" ("Verheiratung"). Der Kommissionierer wartet ggf. einen günstigen Moment ab, insbesondere wenn sich der Fensterförderer kontinuierlich bewegt, so dass keine Zweifel über den Fensterplatz aufkommen, der sich auf Höhe (innerhalb einer vorgegebenen Toleranz) der Quittiertaste befindet.

Das Fördermittel kann ein Gurtband, einen Gliederband, eine Kette oder Ähnliches sein.

Ferner ist es von Vorteil, wenn die Fensterplätze durch optische und physische Elemente (Erhebungen, Vertiefungen im Fördermittel, etc.) sichtbar für die Kommissionierperson voneinander getrennt sind.

Auf diese Weise kann sich die Kommissionierperson sicher sein, in welchen der Fensterplätze sie gerade ein oder mehrere Stückgüter abgelegt hat. Der Kommissionierer soll nicht darüber nachdenken müssen, wo er einen oder mehrere Stückgüter ablegen kann. Er soll bei der Auswahl des freien Fensterplatzes vielmehr intuitiv handeln können. Dabei unterstützen ihn besonders physische Trennelemente, die u.a. verhindern, dass Stückgüter zwischen benachbarten Fenstern "wandern" können. Gleiches gilt z.B. für Leisten, die sich quer zur Förderrichtung auf dem Fensterförderer erstrecken angebracht sind und die so ein Vermischen der abgelegten Stückgüter verschiedener Fensterplätze (z.B. durch Trägheit oder Schlupf) verhindern.

Ein Schalensorter weist von Haus aus sichtbare und physische Unterteilungen auf. Ein Schalnesorter weist eine Vielzahl von separaten, miteinander über ein Zugmittel verbundenen Schalen auf, in die hinein kommissioniert werden kann. Ein Schalensorter hat den Vorteil, dass mit ihm auch gleich sortiert werden kann, d.h. abgelegte Stückgüter ihren Zielstellen zugeführt werden können, ohne dass die Stückgüter vorher an einen Sorter übergegeben werden.

Die oben genannte Aufgabe wird ferner durch eine Lager- und Kommissionieranlage mit einem erfindungsgemäßen Arbeitsplatz gelöst, wobei ein, vorzugsweise einziger, Fensterförderer vorgesehen ist, der die Kommissionierzonen der Arbeitsplätze fördertechnisch miteinander verbindet.

Bei einer vorteilhaften Ausgestaltung der Anlage weist jeder Bereitstellungsplatz Durchlaufkanäle auf, wobei ein Entnahmeende eines Durchlaufkanals einen Zugriffsplatz darstellt und die Durchlaufkanäle automatisiert an ihrem jeweiligen gegenüberliegenden Ende, vorzugsweise sortenrein und ohne Ladehilfsmittel, mit Stückgütern befüllt werden.

Somit erfolgt also allein der Kommissioniervorgang manuell. Das Nachfüllen der Kanäle erfolgt automatisiert. Das Nachführen von Stückgütern innerhalb des Kanals erfolgt ebenfalls vorzugsweise automatisiert, indem z.B. Schwerkraftrollenbahnen oder Ähnliches als Durchlaufkanal eingesetzt werden. Durchlaufkanäle können sich dadurch auszeichnen, dass sie ein geringes Gefälle gegenüber der Horizontalen aufweisen, so dass sich die Stückgüter selbstständig in Richtung des Zugriffsplatzes rutschen.

Ferner ist es von Vorteil, wenn die Anlage einen Sorter aufweist, der sich fördertechnisch an den mindestens einen erfindungsgemäßen Arbeitsplatz anschließt und der eingerichtet ist, die auf dem Fensterförderer abgelegten Stückgüter (Aufträge oder Zeilen) an eine Vielzahl von Zielstellen zu verteilen.

Der Sorter kann zusätzlich eine Sequenzierung durchführen, sollte diese erforderlich sein. Der Sorter führt an den Zielstellen z.B. Auftragszeilen zu einem Auftrag zusammen. Deshalb ist es möglich, die Auftragszeilen zum Zwecke einer Kommissionierung (Zusammenstellen von Stückgütern) ohne Ordnung, d.h. Sequenz oder Reihenfolge, auf die Arbeitsplätze zu verteilen. Somit ist es nicht erforderlich, dass Kommissionieraufträge in Form eines zusammenhängenden Pakets an die Arbeitsplätze vergeben werden. Die Auftragszeilen verschiedener Kommissionieraufträge können durchmischt an die Arbeitsplätze vermittelt werden. Die Zusammenführung der Aufträge erfolgt dann stromabwärts relativ zur Kommissionierung.

Die oben genannte Aufgabe wird ferner durch ein Verfahren nach Anspruch 14 gelöst.

Vorzugsweise bestätigt die Kommissionierperson das Ablegen des oder der Stückgüter gegenüber der Kommissioniersteuerung.

Weiter ist es von Vorteil, wenn das Vermitteln, Bewegen, Greifen, Auswählen, Mitteilen und Ablegen so oft wiederholt wird, bis alle Zeilen eines Auftrags kommissioniert sind. Insbesondere erfolgt die Vermittlung des Zugriffsplatzes und der Entnahmemenge, die Vermittlung des ausgewählten Fensterplatzes sowie ggf. die Bestätigung akustisch, vorzugsweise unter Einsatz eines Pick-by-Voice-Kommissionierleitsystems.

Außerdem ist es von Vorteil, wenn die Vermittlung des Zugriffsplatzes und der Entnahmemenge, optisch, vorzugsweise unter Einsatz eines Pick-by-Light-Kommissionierleitsystems erfolgt.

Bei einer weiteren vorteilhaften Ausgestaltung bekommt die Kommissioniersteuerung den ausgewählten Fensterplatz von einem Sensor signalisiert, der den Fensterförderer in der Kommissionierzone überwacht und der eingerichtet ist, ein Signal an die Kommissioniersteuerung zu übermitteln, das den Fensterplatz identifiziert, in das bzw. auf das die Kommissionierperson gerade ein oder mehrere Stückgüter abgelegt hat.

Mögliche Sensoren für eine derartige Anwendung sind bspw. Gewichtssensoren. Die Gewichtssensoren können über die Länge des Fensterförderers verteilt unter einer Förderebene angeordnet sein. Sobald das oder die Stückgüter auf einen freien Fensterplatz abgelegt werden, wird dies durch die Gewichtssensoren detektiert und an die Kommissioniersteuerung signalisiert. Die Kommissioniersteuerung hat in diesem Fall Kenntnis von einem jeweiligen momentanen (Aufenthalts-)Ort jedes Fensterplatzes und über den (statischen) Ort der Gewichtssensoren. Daraus kann ermittelt werden, in welches Fenster der Kommissionierer gerade das oder die Stückgüter abgelegt hat. Alternativ könnte eine Kamera eingesetzt werden, die die Kommissionierzone entsprechend überwacht. Mittels Bildverarbeitung können die Ablageorte bestimmt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Arbeitsplatzes gemäß der vorliegenden Erfindung;
- Fig. 2: ein Blockdiagramm einer Kommissioniersteuerung, wie sie bei der vorliegenden Erfindung zum Einsatz kommen kann;
- Fig. 3: einen Kommissionierauftrag inklusive Informationen, die von der Kommissioniersteuerung an eine Kommissionierperson vermittelt werden;
- Fig. 4: ein Blockdiagramm einer Lager- und Kommissionieranlage gemäß der vorliegenden Erfindung;
- Fig. 5: eine Seitenansicht von vier benachbart angeordneten Arbeitsplätzen gemäß der vorliegenden Erfindung mit einer dazwischen angeordneten Nachschub-Lagermaschine; und
- Fig. 6: ein Flussdiagramm eines Verfahrens gemäß der vorliegenden Erfindung.

In der nachfolgenden Beschreibung der Figuren werden gleiche Merkmale mit den gleichen Bezugsziffern versehen. Auf Unterschiede zwischen verschiedenen Ausführungsformen von Merkmalen wird besonders eingegangen werden.

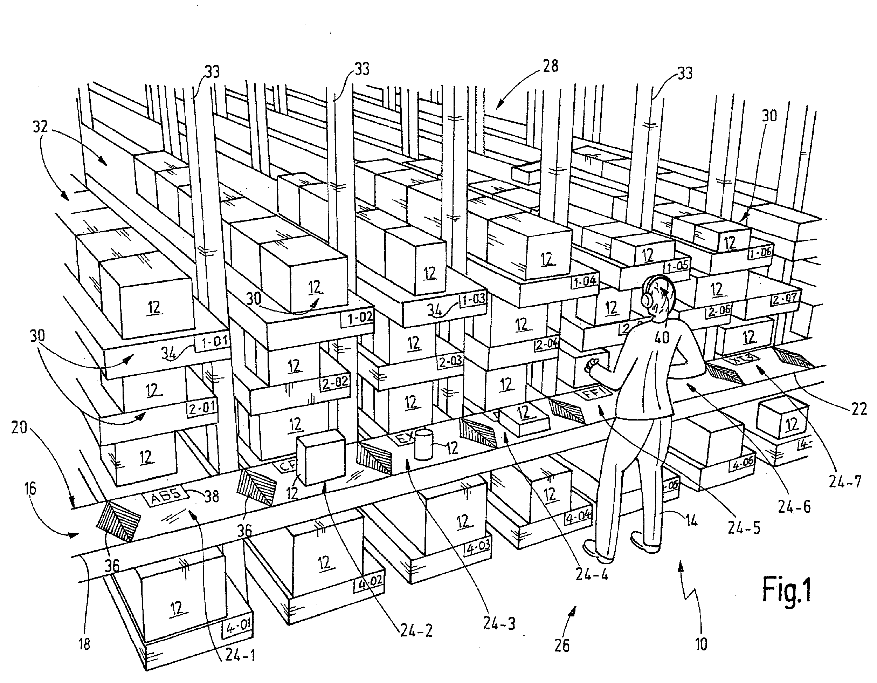

Fig. 1 zeigt eine perspektivische Ansicht eines Arbeitsplatzes 10 gemäß der vorliegenden Erfindung.

Der Arbeitsplatz 10 dient zur Kommissionierung von Stückgütern (Collis) 12, wie z.B. Lebensmittel-Kartons, Getränkebehältern bzw. -paletten oder Ähnlichem. Der Arbeitsplatz 10 kann mit oder ohne Ladehilfsmittel (Behälter, Tablare, etc.) betrieben werden. Mit dem Arbeitsplatz 10 gemäß der vorliegenden Erfindung lassen sich auch Stückgüter 12 mit großen Dimensionen manuell, d.h. händisch, kommissionieren, die von Kommissionierautomaten (wie z.B. einem A-Frame) nicht mehr gehandhabt werden können.

Der Arbeitsplatz 10 wird von einer Kommissionierperson bzw. einen Kommissionierer 14 bedient, der nach dem Kommissionierprinzip "Mann-zur-Ware" arbeitet. Der Kommissionierer 14 kann entlang eines Fensterförderers 16 auf- und abschreiten. Bei dem in der Fig. 1 dargestellten Fensterförderer 16 handelt es sich z.B. um einen Gurtförderer bzw. Gurtbandförderer 18, dessen Fördermittel 20 ein endlos umlaufendes Gurtband 22 ist. Das Fördermittel 20 ist in eine Vielzahl von Fensterplätzen 24 unterteilt, die vorzugsweise kontinuierlich direkt aneinander grenzen. Es können aber auch Abstände zwischen benachbarten Fensterplätzen 24 vorgesehen sein. Ein Fensterplatz 24 ist ein Bereich, d.h. üblicherweise eine Fläche, auf dem Fensterförderer 16 mit einer fest vorgegebenen Länge und Breite (und ggf. Höhe). Die Breite entspricht üblicherweise der geometrischen Breite des Fensterförderers 16. Diese Daten sind steuertechnisch hinterlegt.

Vorzugsweise sind alle Fenster 24 gleich groß. In der Fig. 1 sind explizit sieben Fenster 24-1 bis 24-7 gezeigt. In den Fenstern 24-2 bis 24-4 ist jeweils ein (anderes) Stückgut 12 abgelegt worden. Der Fensterförderer 16 bewegt sich im Idealfall kontinuierlich. Er kann aber auch getaktet bewegt werden. Ein getaktetes Bewegen ist immer dann von Vorteil, wenn kein Pick-by-Voice-System, wie es nachfolgend noch detaillierter beschrieben werden wird, zur Zuweisung eines freien Fensterplatzes 24 zu einem Auftrag oder einer Auftragszeile eingesetzt wird. Es ist bevorzugt, wenn pro Fensterplatz 24 nur ein einziges Stückgut 12 abgelegt wird. Dies reduziert die Kommissionierfehlerquote. Die Kommissionierleistung des Fensterförderers 16 kann 3000 bis 4000 Stückgütern pro Stunde betragen.

Um entnommene Stückgüter 12 auf die Fenster 24 ablegen zu können, bewegt sich der Kommissionierer 14 in einer ihm zugeordneten Kommissionierzone 26, d.h. innerhalb eines Arbeitsbereichs mit, vorzugsweise festen, räumlichen Grenzen. Der Kommissionierer 14 läuft in der Regel, er kann aber auch fahren. Die Kommissionierzone 26 definiert einen Bereich, innerhalb dem sich der Kommissionierer 14 bewegen und Stückgüter entnehmen darf. Jede Kommissionierzone 26 umfasst eine Vielzahl von Zugriffsplätzen 30, die auch Teil eines Bereitstellungsbereichs 28 sind. Der Fensterförderer 16 führt derart durch die Kommissionierzone 26, dass der Kommissionierer 14 auf eine ergonomisch günstige Weise Stückgüter 12 aus den Zugriffsplätzen 30 entnehmen kann und die entnommenen Stückgüter 12 auf den Fensterförderer 16 legen kann. Der Bereitstellungsbereich 28 ist ein Raum, der an die Kommissionierzone 26 angrenzt und sich mit der Kommissionierzone 26 überlappen kann. Der Bereitstellungsbereich 28 dient zur kurzfristigen Bereitstellung von Stückgüter 12, die in naher Zukunft kommissioniert werden sollen. Er stellt also eine Art Stückgutpuffer da, der sich von einem Lagerbereich unterscheiden kann, wo Stückgüter längerfristig bevorratet werden.

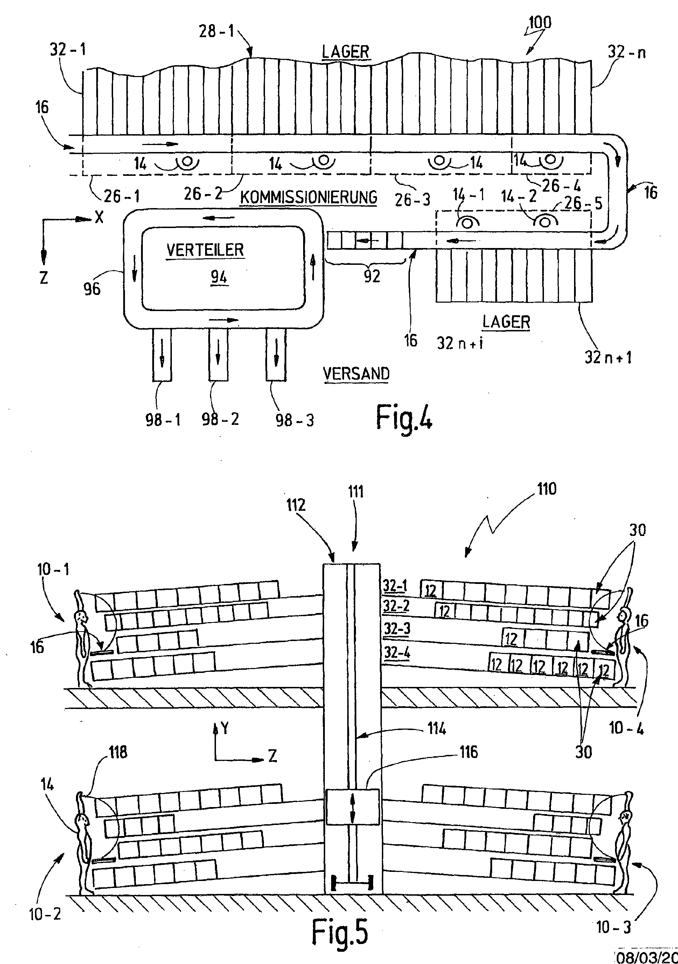

Bei den in der Fig. 1 darstellten Zugriffsplätzen 30, handelt es sich um beispielsweise die jeweiligen Enden einer Vielzahl von Durchlaufkanälen 32, wie sie noch detaillierter in Zusammenhang mit Fig. 5 beschrieben werden. Anstatt Durchlaufkanälen 32 können auch andere Lagereinrichtungen, z.B. (Behälter-) Regale, Palettenstellplätze oder Ähnliches, eingesetzt werden. Die Durchlaufkanäle 32 können in Form von geneigten Schwerkraftrollenbahnen oder angetriebenen, horizontalen Bandförderern realisiert sein, um nur einige Typen exemplarisch zu nennen. Die Durchlaufkanäle 32 dienen zur Bereitstellung und zum Nachschub von zu kommissionierenden Stückgütern 12. Üblicherweise wird jeder Zugriffsplatz 30 sortenrein befüllt, d.h. es befinden sich dort lediglich Stückgüter 12 einer Sorte bzw. eines einzigen (Waren-) Typs. Die Kanäle 32, und somit die Zugriffsplätze 30, können übereinander und/oder nebeneinander angeordnet sein und vorzugsweise direkt aneinander grenzen. Im Beispiel der Fig. 1 sind die Kanäle 32 in vier Ebenen angeordnet. Die Durchlaufkanäle 32 können an Regalstehern 33 montiert sein.

Jeder Zugriffsplatz 30 weist vorzugsweise eine eigene Zugriffsplatzidentifikation 34 auf, wie sie in der Fig. 1 exemplarisch in Form eines (Klebe-)Etiketts inklusive einer Zugriffsplatznummer dargestellt ist. Die Zugriffsplatznummer setzt sich in der Fig. 1 z.B. aus eine Ebene (1 - 4) und einer sich fortpflanzenden Platznummer (01 - n) zusammen. In der Fig. 1 stellt die oberste Ebene z.B. die erste Ebene 1 dar. Die Zugriffsplatznummern pflanzen sich von links nach rechts fort. Die unterste der vier Ebenen kann unterhalb des Fensterförderers 16 liegen. Sie kann entweder zur Bereitstellung von Stückgütern 12 verwendet werden, die weniger häufig benötigt werden (C-Artikel). Alternativ können einige oder alle unteren Durchlaufkanäle 32 der vierten Ebene als Rücklaufkanäle für (leere oder nicht mehr benötigte) Ladehilfsmittel genutzt werden, auf denen die Stückgüter 12 in den oberen drei Ebenen zum Arbeitsplatz 10 transportiert werden, sofern Ladehilfsmittel eingesetzt werden. Vorzugsweise werden aber keine Ladehilfsmittel (wie z.B. Tablare, Behälter, Kartons, oder Ähnliches) eingesetzt. Die Kommissionierung erfolgt vorzugsweise ladehilfsmittellos.

Sobald der Kommissionierer 14 ein Stückgut 12 aus einem der Zugriffsplätze 30 (nachfolgend auch als "Bereitstellungsplatz" bezeichnet) gegriffen hat, legt er es auf einen freien, unbelegten Fensterplatz 24. Die Fensterplätze 24 sind durch (optische) Fenstermarker 36 voneinander getrennt. Im Beispiel der Fig. 1 sind die Fenstermarker 36 durch Aufdrucke mit z.B. dreieckiger Grundfläche realisiert. Die Dreiecke sind dabei so ausgerichtet, dass deren Spitzen in die Mitte des zugehörigen Fensterplatzes 24 weisen. Es versteht sich, dass andere Fenstermarker 36 eingesetzt werden können, wie z.B. Trennleisten, die sich entlang einer Grenze benachbarter Fensterplätze 24 erstrecken. Ferner versteht es sich, dass die optischen und physischen Trennmerkmale gemeinsam oder in isolierter Form eingesetzt werden können.

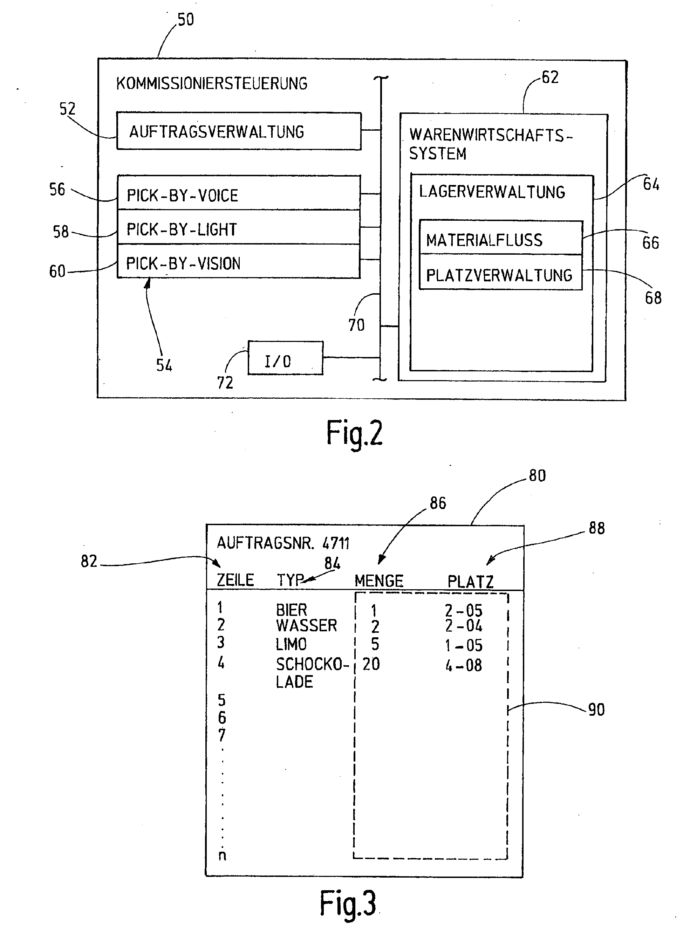

Die Fensterplätze 24 können ferner mit weiteren Identifikationsmerkmalen, wie z.B. einem aufgedruckten Code 38 versehen sein. Die Codes 38 bauen sich im Beispiel der Fig. 1 aus zwei Buchstaben in Kombination mit einer Zahl auf. Die Buchstaben- und Zahlenabfolge ist vorzugsweise chaotisch, um es dem Kommissionierer 14 zu erschweren, zu erahnen, welchen Code der nächste freie Fensterplatz 24 trägt. Damit ist der Kommissionierer 14 gezwungen, das Identifizierungsmerkmal aktiv zu lesen, um es später an eine übergeordnete Kommissioniersteuerung zu kommissionieren, wie sie im Zusammenhang mit der Fig. 2 noch detaillierter beschrieben werden wird.

Im Beispiel der Fig. 1 kann der Kommissionierer 14 den oder die nächsten, zu greifenden Stückgüter 12 entweder auf den freien Fensterplatz 24-1, 24-5, 24-6 oder 24-7 stellen. Diese Fensterplätze 24 sind frei, d.h. noch nicht mit einem Stückgut 12 belegt. Lediglich die Fensterplätze 24-2, 24-4 sind, hier jeweils exemplarisch mit einem einzigen, Stückgut 12 belegt.

Der Kommissionierer 14 kann mit einer Einrichtung 40 zum Zuweisen freier Fensterplätze 24 ausgestattet sein, die er dann mit sich trägt: Alternativ können auch ortsfeste Einheiten eingesetzt werden, wie z.B. Quittiertasten (nicht dargestellt), die in Seitenwangen des Fensterförderers 16 integriert sind, Gewichtssensoren (nicht dargestellt, die unter dem Fensterförderer 16 angeordnet sind, oder eine Kamera, die über dem Fensterförderer angeordnet ist und ein Ablegen von Stückgütern 12 in oder auf einen freien Fensterplatz 24 überwacht. Die Fensterplätze können auch gescannt werden.

In der Fig. 1 trägt der Kommissionierer 14 als Einrichtung 40 zum Zuweisen freier Fensterplätze 24 ein Headset, das einen Kopfhörer und ein Mikrofon (nicht dargestellt) aufweist, um mit einer Kommissioniersteuerung kommunizieren zu können (Pick-by-Voice und Fensterplatzzuweisung mittels Sprache). Über den Kopfhörer bekommt der Kommissionierer 14 angesagt, aus welchem der Zugriffsplätze 30 er den oder die nächsten Stückgüter 12 holen, d.h. greifen (Picken), muss. Eine Entnahmemenge bekommt er ebenfalls angesagt. In diesem Fall bewegt sich der Kommissionierer 14 zu dem vermittelten Zugriffsplatz 30 und entnimmt so viele Stückgüter 12, wie er es in Form der Entnahmemenge angesagt bekommen hat. Auf dem Weg zu dem Zugriffsplatz 30, oder wenn der Kommissionierer 14 am Zugriffsplatz 30 angekommen ist, wählt der Kommissionierer 14 den vorzugsweise am nächsten liegenden freien Fensterplatz 24 aus und teilt dies mittels Sprache mit (Zuweisung). In der Fig. 1 könnte dem Kommissionierer 14 exemplarisch vermittelt worden sein, ein Stückgut 12 aus dem Zugriffsplatz "1-05" zu greifen. Da sich der freie Fensterplatz 24-5 mit der Bezeichnung "FF1" dann direkt vor dem Kommissionierer 14 befindet, könnte der Kommissionierer 14 mittels Spracheingabe diesen Code an die Kommissioniersteuerung mittels Spracheingabe übermitteln.

Ein Blockdiagramm der eingesetzten Kommissioniersteuerung 50 ist in Fig. 2 gezeigt.

Die Kommissioniersteuerung 50 der Fig. 2 kann modular eine Auftragsverwaltung 52, Kommissionierleitstrategien 54 (wie z.B. Pick-by-Voice 56, Pick-by-Light 58, Pick-by-Vision 60 oder Ähnliches), ein Warenwirtschaftssystem 62, das wiederum eine Lagerverwaltung 64 aufweist, die wiederum einem Materialfluss 66 sowie eine Platzverwaltung 68 regeln kann, und eine Schnittstellenverwaltung 72 aufweisen. Die verschiedenen Module, die größtenteils in Form von Software implementiert sind, können über einen Kommunikationsbus 70 miteinander kommunizieren. Die Kommissioniersteuerung 50 kann Teil eines Zentralrechners (nicht dargestellt) sein.

Unter "Pick-by-Vision" wird ein Kommissionierverfahren verstanden, bei dem der Kommissionierer 14 eine Datenbrille trägt, die Navigationshinweise in die Sicht des Kommissionierers 14 projiziert, so dass der Kommissionier 14 visuell angezeigt bekommt, wohin er gehen muss und wie viel Stückgüter 14 er aus welchem Zugriffsplatz 30 entnehmen muss.

Die Auftragsverwaltung 52 sorgt dafür, dass eingehende Kommissionieraufträge, wobei ein exemplarischer Kommissionierauftrag 80 in der Fig. 3 gezeigt ist, zur Abarbeitung auf den oder die Arbeitsplätze 10 verteilt werden. Dabei spielen Faktoren wie Auslastung, bereitgestelltes Stückgutsortiment, Wegoptimierung und Ähnliches eine Rolle. Arbeitsplätzen 10 können komplette Aufträge, aber auch nur einzelne Auftragszeilen zur Abarbeitung zugewiesen werden.

Ein exemplarischer (Kommissionier-) Auftrag 80, wie er in der Kommissioniersteuerung gehandhabt wird, ist in der Fig. 3 der Auftragsnummer "4711" gezeigt. Eine Kundenbestellung bzw. ein Kundenauftrag (nicht dargestellt) weist üblicherweise nur die gewünschten (Waren-/Artikel-) Typenbezeichnungen und die jeweils gewünschte Anzahl eines einzigen Kunden auf. Der (Anlagen-)Auftrag 80 der Fig. 3 weist eine oder mehrere Zeilen 82, optional eine Typenbezeichnung 84, eine Entnahmemenge 86 sowie eine Lager- bzw. Zugriffsplatznummer 88 auf. Der zu kommissionierende Stückguttyp 84 und die entsprechende Menge 86 werden von dem oder den Kunden vorgegebenen (Batch-Picking). Die Platznummer 88 wird üblicherweise durch die Platzverwaltung 68 bestimmt.

Ein Kundenauftrag kann sich von einem (Anlagen-) Auftrag 80 unterscheiden, indem beim Anlagenauftrag 80 vorzugsweise eine Batchbildung stattgefunden hat, d.h. alle Kundenaufträge, die einen bestimmten Stückguttyp enthalten, wurden hinsichtlich der Entnahmemenge zusammengefasst, um die Wege des Kommissionierers in der Anlage zu verringen bzw. zu minimieren. Der Kommissionierer entnimmt dann z.B. anstatt einmal 5 Artikel A und später 7 Artikel A auf ein Mal 12 Artikel A und gibt jeden der 12 Artikel A vorzugsweise auf einen eigenen Fensterplatz 24 ab. Jeder der zwölf Fensterplätze 24 "labelt" also einen der zwölf Artikel A, die anschließend z.B. mit einem Sorter auf die Kundenaufträge verteilt werden können. Die zwölf Fensterplätze werden während ihrer Reise durch die Anlage verfolgt ("getrackt"), um Übergaben zwischen verschiedenen Fördertechnikkomponenten sicher handhaben zu können.

Wenn hier von einer "Auftragszeile" gesprochen wird, kann sowohl eine Kundenauftragszeile als auch eine unter Batchbildung generierte Auftragszeile gemeint sein. Die Zuweisung eines freien, unbelegten Fensterplatzes zu einer Auftragszeile, d.h. die Verheiratung eines Fenster mit einem oder mehreren abgelegten Stückgütern, hängt davon ab, wie viele Stückgüter pro Fenster abgelegt werden dürfen. Üblicherweise wird pro Fenster 24 ein Stückgut 12 abgelegt. Wenn eine Auftragszeile also als Entnahmenge "12" angibt, werden zwölf Stückgüter dieses Typs einzeln auf zwölf Fenster 24 gelegt und so mit zwölf Fenstern 24 "verheiratet". All diese Varianten sind von der Formulierung "Zuweisen eines freien, unbelegten Fensterplatzes zu einer Auftragszeile" umfasst.

Die Entnahmemenge 86sowie die (Zugriffs-) Platznummer 88 stellen eine Information 90 dar, die dem Kommissionierer 14 von der Kommissioniersteuerung 50 vermittelt wird. Die Vermittlung kann bspw. optisch (vgl. Pick-by-Light 58 oder alternativ Pick-by-Vision 60 in Fig. 2) oder akustisch (vgl. Pick-by-Voice 56 in Fig. 2) erfolgen, nachdem entsprechende Signale von der Kommissioniersteuerung 50 generiert und kommuniziert wurden.

Je nach technischer Ausstattung einer Lager- und Kommissionieranlage 100, wie sie unter Bezugnahme auf Fig. 4 noch näher beschrieben werden wird, werden die Zugriffsplätze 30 also entweder visuell und/oder akustisch angezeigt. Damit auch ausreichend Stückgüter 12 an den Zugriffsplätzen 30 vorhanden sind, ist es eine Aufgabe der Lagerverwaltung 64 für ausreichend Nachschub zu sorgen. Welche Wege die Stückgüter 12 innerhalb einer Anlage 100 zurücklegen, wird durch die Materialflusssteuerung 66 bestimmt. Ob Stückgüter 12 überhaupt nachbestellt werden müssen, weil sie in der Anlage 100 gar nicht vorhanden sind, bestimmt das Warenwirtschaftssystem 62.

Unter Bezugnahme auf Fig. 4 ist eine exemplarische Ausführungsform einer Lager- und Kommissionieranlage 100 gezeigt.

Die Anlage 100 kann mehrere Kommissionierzonen 26 aufweisen. In der Fig. 4 sind fünf Kommissionierzonen 26-1 bis 26-5 gezeigt. Die ersten vier Kommissionierzonen 26-1 grenzen direkt aneinander und werden jeweils vom Fensterförderer 16 durchquert. In jeder der Kommissionierzonen 26-1 bis 26-2 arbeitet jeweils ein Kommissionierer 14. Es können aber auch mehrere Kommissionierer 14 innerhalb einer Kommissionierzone 26 arbeiten, wie es exemplarisch für die Kommissionierzone 26-5 gezeigt ist, wo ein erster Kommissionierer 14-1 und ein zweiter Kommissionierer 14-2 arbeiten. Die fünfte Kommissionierzonen 26-5 liegt entfernt zu den ersten vier Kommissionierzonen 26-1 bis 26-4 und ist über den Fensterförderer 16 fördertechnisch angeschlossen.

Die ersten vier Kommissionierzonen 26-1 bis 26-4 grenzen jeweils an einen ersten Bereitstellungsbereich 28-1 an, der wiederum eine Vielzahl von Durchlaufkanälen 32-1 bis 32-n aufweisen kann. Anstatt Durchlaufkanälen 32 könnte eine zum Fensterförderer 16 parallele Fördertechnik (nicht dargestellt) zum An- und Abtransport von Lagerbehältern (nicht dargestellt) verlaufen. Alternativ könnten die Bereitstellungsbereiche 28 auch einzelne Palettenstellplätze oder Ähnliches aufweisen.

Je nach Auslastung der Kommissionierzonen 26 können diese von der Kommissioniersteuerung 50 auch weiter unterteilt oder alternativ zusammengefasst werden, d.h. kleiner oder größer gemacht werden, so dass mehr oder weniger Kommissionierer 14 entlang des Fensterförderers 16 arbeiten können. Dies ist besonders zum Abfedern von Spitzenauslastungen von Vorteil. So kommt es bspw. bei Buchhändlern in der Oster- und Weihnachtszeit häufig zu Bestellungsspitzen, die dann kurzfristig abgearbeitet werden müssen. In diesem Fall können die Bereitstellungsbereiche 28 mit mehr Stückgütern 12 befüllt werden, als üblich. Die Stückgüter 12 können zu diesem Zweck aus einem Lager in den Bereitstellungsbereich 28 transferiert werden, das entfernt zu den Arbeitsplätzen 10 liegen kann. Die Kommissionierzonen 26 können mit mehr Kommissionierern 14 bestückt werden. Es können mehr Zonen 26 eingerichtet werden. Die Erfindung zeichnet sich also durch eine hohe Flexibilität und Skalierbarkeit aus.

Kommissionierer 14 können übergangsweise auch in einer anderen Zone 26 aushelfen, sollte dies erforderlich sein. Jeder Kommissionierer 14 kann sich gegenüber der Kommissioniersteuerung 50 an einer Kommissionierzone 26 an- und abmelden. Die Grenzen der Kommissionierzonen 26 können durch die Kommissioniersteuerung variabel definiert werden, sollte dies erforderlich sein.

Zurückkehrend zur Fig. 4 kann sich an den Fensterförderer 16 ein Taktband 92 anschließen, wodurch die auf Fensterplätzen 24 abgelegten Stückgüter 12 nicht mehr kontinuierlich, sondern getaktet einem optionalen Verteilsystem 94, wie z.B. einem Sorter 96 zugeführt werden können. Der in Fig. 4 gezeigte Sorter 96 läuft endlos um und passiert dabei eine Vielzahl von Zielstellen 98. Exemplarisch sind in Fig. 4 drei Zielstellen 98-1 bis 98-3 gezeigt. Jede Zielstellen kann bei z.B. zeilenweiser Abarbeitung der Aufträge 80 einen vollständigen Auftrag 80 zugeordnet bekommen, so dass Kommissionierzeilen 82, die zu einem Kommissionierauftrag 80 gehören und ungeordnet am Sorter 96 ankommen, an den Zielstellen 98 zusammengeführt werden können, wenn die Auftragszeilen 82 chaotisch über die Kommissionierzonen 26 verteilt wurden. Von den Zielstellen 98 können fertige Aufträge 80, d.h. wenn alle Stückgüter 12, die zur Abarbeitung eines Auftrags 80 gemäß den entsprechenden Zeilen 82 benötigt werden, gesammelt wurden, an einen Versand übergeben werden oder direkt von den Zielstellen 98 aus versandt werden.

In Fig. 5 ist eine Seitenansicht einer weiteren Ausführungsform der vorliegenden Erfindung gezeigt. Fig. 5 zeigt exemplarisch vier Arbeitsplätze 10-1 bis 10-4, die hier in zwei Ebenen gegenüberliegend einer Versorgungsgasse (Regalgasse) 111 angeordnet sein können. In der Versorgungsgasse 111 ist ein zentrales Bediengerät 112, wie z.B. ein Regalbediengerät 114 vorgesehen, welches wiederum über ein höhenverstellbares Lastaufnahmemittel 116 verfügt, um die hier wiederum exemplarisch als Durchlaufkanäle 32 dargestellten Bereitstellungsbereiche 28 mit (Nachschub-) Stückgütern 12 zu befüllen. Das Regalbediengerät 114 kann auch horizontal verfahrbar sein, d.h. senkrecht zur Zeichnungsebene der Fig. 5 fahren, um nebeneinander angeordnete Kommissionierzonen 26 (vgl. Fig. 4) mit Nachschub versorgen zu können.

Die Arbeitsplätze 10-1 bis 10-4 der Fig. 5 weisen jeweils vier Ebenen für die Zugriffsplätze 30 auf. Die Zugriffsplätze 30 liegen vorzugsweise alle innerhalb einer Armreichweite 118, wie sie hilfsweise in Form des Halbkreises für jeden Kommissionierer 14 angedeutet ist. Der Fensterförderer 16 befindet sich vorzugsweise in Hüfthöhe, so dass der Kommissionierer 14 ergonomisch arbeiten kann. Schwere Stückgüter 12 werden vorzugsweise über den Kanal 32-3 bereitgestellt, damit der Kommissionierer 14 die Stückgüter 12 lediglich auf den Fensterförderer 16 ziehen muss.

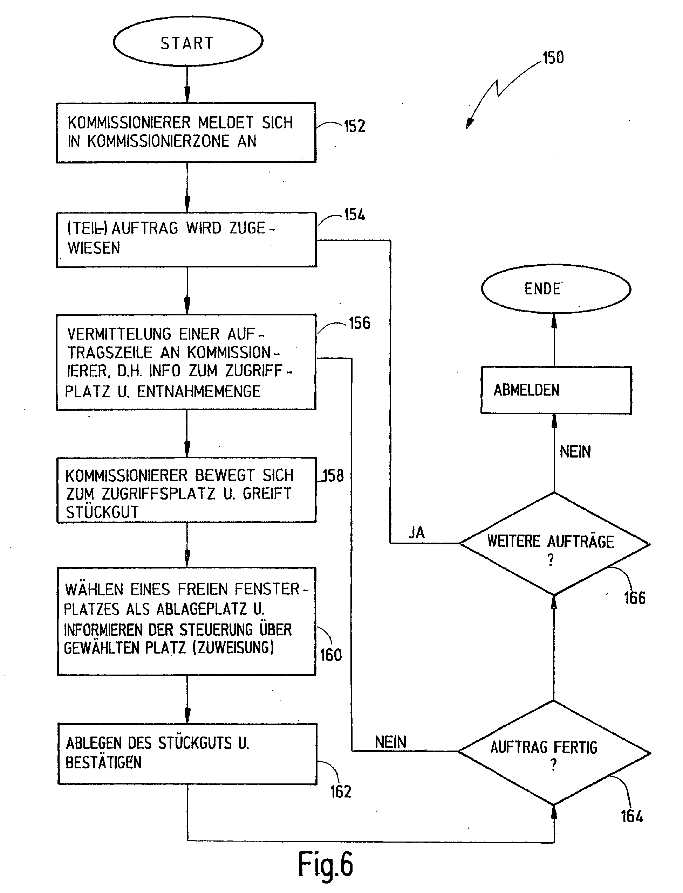

Bezug nehmend auf Fig. 6 ist ein Verfahren 150 zum manuellen, beleglosen stationären Kommissionieren von Stückgütern 12 gemäß einem Kommissionierauftrag 80 durch eine Kommissionierperson 14 gezeigt. Es sei darauf hingewiesen, dass nicht alle gezeigten Verfahrensschritte tatsächlich zur Umsetzung des Verfahrens 150 gemäß der vorliegenden Erfindung erforderlich sind. So ist z.B. der erste Schritt 152 optional.

Gemäß dem Schritt 152 meldet sich der Kommissionierer 14 zu Beginn seiner Arbeit gegenüber der Kommissioniersteuerung 50 in einer Kommissionierzone 26 an. Die Kommissioniersteuerung 50 kann dann abfragen, ob alle Auftragszeilen 82, die der Kommissionierzone 26 möglicherweise bereits zuvor zugeteilt wurden, auch tatsächlich abgearbeitet wurden. Gibt es "alte" Auftragszeilen 82, werden diese dem neu angemeldeten Kommissionierer 14 erneut zugewiesen.

Allgemein werden dem angemeldeten Kommissionierer 14 Teilaufträge oder vollständige Aufträge 80 vorzugsweise in Form von Auftragszeilen 82 zugewiesen (vgl. Schritt 154). Dabei vermittelt die Kommissioniersteuerung 50 in einem Schritt 156 die Information 90 an den Kommissionierer 14. Die Information 90 umfasst mindestens die Entnahmemenge 86 sowie den Zugriffsplatz 88. Die Vermittlung kann visuell und/oder akustisch erfolgen.

Sobald der Kommissionierer weiß, von welchem Zugriffsplatz 30 er den oder die nächsten Stückgüter 12 greifen muss, bewegt er sich in einem Schritt 158 zu diesem Zugriffsplatz 30. Sobald er dort angelangt ist, greift er die Stückgüter 12 in Übereinstimmung mit der entsprechenden Entnahmemenge 86.

Während des Bewegens und/oder des Greifens, bzw. spätestens nachdem der Kommissionierer 14 die Stückgüter 12 gegriffen hat, wählt er einen freien Fensterplatz 24 als Ablageplatz aus (vgl. Verfahrensschritt 160). Die Kommissioniersteuerung 50 wird über den ausgewählten Fensterplatz 24 informiert. Zu diesem Zeitpunkt erfolgt die datentechnische Zuweisung des Fensterplatzes 24 zur Auftragszeile 82 (Verheiterung). Diese Information ist für einen nachfolgend angeordneten Sorter 96 und somit für die Verteilung auf die Zielstellen 98 von Interesse sein. Wie bereits oben erwähnt, kann die Kommissioniersteuerung 50 aktiv vom Kommissionierer 14 über den ausgewählten Fensterplatz 24 informiert werden, indem der Kommissionierer 14 z.B. eine entsprechende Spracheingabe macht. Alternativ können Tasten oder Sensoren, wie die zuvor exemplarisch erwähnten Gewichtssensoren, oder eine Kameraüberwachung mit integrierter Bildverarbeitung und Objekterkennung vorgesehen sein.

In Schritt 162 legt der Kommissionierer 14 die gegriffenen Stückgüter 12 auf den ausgewählten Fensterplatz 24 ab und kann optional das Ablegen bestätigen. Das Ablegen 162 und das Auswählen 160 kann simultan erfolgen, insbesondere wenn externe Sensoren das Ablegen, und somit das Informieren der Kommissioniersteuerung 50 über den ausgewählten Fensterplatz 24 auf automatischem Wege, übernehmen.

In einem Schritt 164 kann anschließend gefragt werden, ob für die Kommissionierzone 26 weitere Zeilen 82 zur Abarbeitung anstehen. Wenn weitere Zeilen 82 zu kommissionieren sind, kehrt die Steuerung zum Schritt 156 zurück. Wenn der Auftrag 80 fertig kommissioniert ist, wird in einem Schritt 166 abgefragt, ob weitere Aufträge 80 zu kommissionieren sind. Wenn weitere Aufträge 80 zu kommissionieren sind, kehrt man zum Schritt 154 zurück. Sind keine weiteren Aufträge 80 zu kommissionieren, kann sich der Kommissionierer 14 abmelden und das Verfahren ist beendet.

## Patentansprüche

1. Arbeitsplatz (10) zum manuellen, beleglosen stationären Kommissionieren von Stückgütern (12) gemäß einem Kommissionierauftrag (80) durch eine Kommissionierperson (14), aufweisen:
einen Fensterförderer (16), der ein Fördermittel (20) aufweist, das eine Vielzahl von optisch voneinander abgrenzbaren Fensterplätzen (24) aufweist, wobei jeder Fensterplatz (24) einen fest definierten Bereich des Fördermittels (20) umfasst, der zur Aufnahme von mindestens einem Stückgut (12) geeignet ist, wobei der Fensterförderer (16) durch eine Kommissionierzone (26) verläuft, die der Kommissionierperson (14) zugeordnet ist;
einen Bereitstellungsbereich (28), wo verschiedene Typen von Stückgütern (12) an einer Vielzahl von Zugriffsplätzen (30) bereitgestellt werden, wobei der Bereitstellungsbereich (28) derart relativ zu dem Fensterförderer (16) angeordnet ist, dass die Kommissionierperson (14) Stückgüter (12) von jedem Zugriffsplatz (30) händisch greifen und auf den Fensterförderer (16) legen kann;
einer Kommissioniersteuerung (50), die eine Lagerverwaltung und Auftragsabwicklung (52, 64) steuert, zum Vermitteln von Informationen (90) an die Kommissionierperson (14) hinsichtlich eines Zugriffsplatzes (88) und einer Entnahmemenge (86) gemäß einer Auftragszeile (82) des Kommissionierauftrags (80); **gekennzeichnet durch**
eine Einrichtung (40) zum Zuweisen eines freien, unbelegten Fensterplatzes (24) zu der Auftragszeile (82) **durch** eine Auswahl und Eingabe der Kommissionierperson (14), nachdem der Kommissionierperson (14) die Auftragszeile (82) vermittelt wurde, wobei der freie Fensterplatz (24) nach der Zuweisung belegt ist,
wobei jeder der Fensterplätze (24) einen lesbaren, eindeutigen Code (38) trägt.

2. Arbeitsplatz nach Anspruch 1, wobei die Kommissioniersteuerung (50) ein Pick-by-Voice-Kommissionierleitsystem (54, 58) aufweist, das eingerichtet ist, der Kommissionierperson (14) akustisch den durch die Auftragszeile (82) bestimmten Zugriffsplatz (30, 88) und die Entnahmemenge (86) zu vermitteln, und das eingerichtet ist, die Zuweisung des freien Fensterplatzes (24) mittels Spracheingabe durch die Kommissionierperson (14) an die Kommissioniersteuerung (50) zu vermitteln.

3. Arbeitsplatz nach Anspruch 1 oder 2, wobei die Kommissioniersteuerung (50) ein Pick-by-Light-Kommissionierleitsystem (54, 58) aufweist, das eingerichtet ist, jeden der Zugriffsplätze (30) mittels einer optischen Anzeige zu aktivieren und zu desaktivieren und vorzugsweise die Entnahmemenge (86) optisch anzuzeigen.

4. Arbeitsplatz nach einem der Ansprüche 1 bis 3, wobei jeder der Fensterplätze (24) mit einem Marker versehen ist, um einen Kalibrierung der Vielzahl der Fensterplätze (24) durchführen zu können.

5. Arbeitsplatz nach einem der Ansprüche 1 bis 4, wobei die Codierung chaotisch ist.

6. Arbeitsplatz nach Anspruch 5, wobei die Einrichtung (40) zum Zuweisen eines freien Fensterplatzes (24) eine Code-Leseeinheit aufweist.

7. Arbeitsplatz nach Anspruch 3, wobei die Einrichtung (40) zum Zuweisen freier Fensterplätze (24) eine Quittiertaste aufweist.

8. Arbeitsplatz nach einem der Ansprüche 1 bis 7, wobei der Fensterförderer (16) kontinuierlich angetrieben ist.

9. Arbeitsplatz nach einem der Ansprüche 1 bis 8, wobei das Fördermittel (20) ein Gurtband (22), ein Gliederband, ein Schalen-Sorter oder eine Kette ist.

10. Arbeitsplatz nach einem der Ansprüche 1 bis 9, wobei die Fensterplätze (24) durch optische und/oder physische Elemente (36) sichtbar für die Kommissionierperson voneinander getrennt sind.

11. Lager- und Kommissionieranlage (100) mit mindestens einem Arbeitsplatz (10) nach einem der vorhergehenden Ansprüche, wobei ein vorzugsweise einziger Fensterförderer (16) vorgesehen ist, der die Kommissionierzonen (26) der Arbeitsplätze (10) fördertechnisch miteinander verbindet.

12. Lager- und Kommissionieranlage nach Anspruch 11, wobei jeder Bereitstellungsbereich (28) Durchlaufkanäle (32) aufweist, wobei jedes Entnahmeende eines Durchlaufkanals (32) einen Zugriffsplatz (30) darstellt, wobei die Durchlaufkanäle (32) automatisiert an ihrem jeweiligen gegenüberliegenden Ende, vorzugsweise sortenrein und ohne Ladehilfsmittel, mit Stückgüter (12) befüllt werden.

13. Lager- und Kommissionieranlage (100) nach Anspruch 10 oder 11, die ferner einen Sorter (96) aufweist, der sich fördertechnisch an den mindestens einen Arbeitsplatz (10) anschließt und der eingerichtet ist, die auf dem Fensterförderer (16) abgelegten Stückgüter (12) an eine Vielzahl von Zielstellen (98) zu verteilen, wobei jede Zielstelle (98) einem Kommissionierauftrag (80) zugeordnet ist.

14. Verfahren (150) zum manuellen, beleglosen Kommissionieren von Stückgütern (12) gemäß einem aus mindestens einer Zeile (82) bestehenden Kommissionierauftrags (80) mit folgenden Schritten:
Zuweisen (154) des Kommissionierauftrags (80) an eine Kommissionierperson (14) zum zeilenweise Abarbeiten des Kommissionierauftrags (80);
der Kommissionierperson (14) einen Zugriffsplatz (30, 88) und eine Entnahmemenge (86) gemäß einer gerade zu bearbeitenden Zeile (82) vermitteln (156);
die Kommissionierperson (14) bewegt sich (158) zu dem vermittelten Zugriffsplatz (30) und greift die Entnahmemenge (82) von Stückgütern (12) von dem Zugriffsplatz (30) **dadurch gekennzeichnet, dass**
während des Bewegens und/oder des Greifens, aber spätestens nachdem die Kommissionierperson (14) mindestens ein erstes Stückgut (12) der Entnahmemenge (86) gegriffen hat, wählt (160) die Kommissionierperson (14) einen freien, noch nicht mit Stückgütern (12) belegten Fensterplatz (24) aus einer Vielzahl von Fensterplätzen (24) eines Fensterförderers (16) aus, der durch eine Kommissionierzone (26) verläuft, die der Kommissionierperson (14) zugeordnet ist, wobei jeder der Fensterplätze (24) einen lesbaren eindeutigen Code (38) trägt;
Mitteilen (160) des Codes des ausgewählten Fensterplatzes (24) an die Kommissioniersteuerung (50); und
Ablegen (162) des oder der gegriffenen Stückgüter (12) auf den ausgewählten Fensterplatz (24).

15. Verfahren nach Anspruch 14, wobei pro Fensterplatz (24) ein Stückgut der Entnahmemenge (86) abgelegt, so dass pro Auftragszeile so viele freie Fensterplätze zugewiesen werden, wie es durch die Entnahmemenge vorgegeben ist.

16. Verfahren nach Anspruch 14 oder 15, wobei das Vermitteln (156), Bewegen (158), Greifen (158), Auswählen (160), Mitteilen (160) und Ablegen (162) so oft wiederholt wird, bis alle Zeilen eines Auftrags (80) kommissioniert sind.

17. Verfahren nach einem der Ansprüche 14 bis 16, wobei die Vermittlung (154) des Zugriffsplatzes (30, 88) und der Entnahmemenge (82), die Mitteilung (160) des ausgewählten Fensterplatzes (24) sowie ggf. die Bestätigung akustisch, vorzugsweise unter Einsatz eines Pick-by-Voice-Kommissionierleitsystems (56), erfolgt.

18. Verfahren nach einem der Ansprüche 14 bis 17, wobei die Vermittlung (154) des Zugriffsplatzes (30, 88) und der Entnahmemenge (86) optisch, vorzugsweise unter Einsatz eines Pick-by-Light-Kommissionierleitsystems (58), erfolgt.

19. Verfahren nach Anspruch 18, wobei die Kommissioniersteuerung (50) den ausgewählten Fensterplatz (24) von einem Sensor signalisiert bekommt, der den Fensterförderer (16) in der Kommissionierzone (26) überwacht und der eingerichtet ist, ein Signal an die Kommissioniersteuerung (50) zu übermitteln, das den Fensterplatz (24) identifiziert, in das die Kommissionierperson (14) gerade ein oder mehrere Stückgüter (12) abgelegt hat.

## Claims

1. A work station (10) for manually and stationary picking of piece goods (12) in a paperless manner by an order-picking person (14) in accordance with a picking order (80) comprising:
a window conveyor (16) having conveying means (20) which comprises a plurality of optically distinguishable window locations (24), wherein each of the window locations (24) includes a permanenfily defined region of the conveying means (20) which is suitable for receiving of at least one of the piece goods (12), wherein the window conveyor (16) extends through a picking zone (26) which is assigned to the order-picking person (14);
a provision region (28), where different types of the piece goods (12) are provided at a plurality of access locations (30), wherein the provision region (28) is ranged relative to the window conveyor (16) such that the order-picking person (14) can grasp piece goods (12) manually from each of the access locations (30) and place same on the window conveyor (16);
an order-picking control (50) controlling warehouse management and order processing (52, 64) configured to transmit information (90) concerning one of the access locations (88) and a removal quantity (86) to the order-picking person (14) in accordance with an order line (82) of the picking order (80); **characterized by**
a device (40) for allocating a free, and unoccupied, one of the window locations (24) to one of the order lines (82) based on selection and entry of the order-picking person (14), after the one of the order lines (82) was communicated the order-picking person (14), wherein the free window location (24) is occupied after the allocation, wherein each of the window locations carries an unambiguous readable code (38).

2. The work station of claim 1, wherein the order-picking control (50) comprises a pick-by-voice order-picking guidance system (54, 58) which is configured to signal acoustically the access location (30, 88), which is determined by the order line (82), and the removal quantity (86) to the order-picking person (14), and which is configured to communicate the allocation of the free window location (24) to the order-picking control (50) by means of speech input of the order-picking person (14).

3. The work station of claim 1 or 2, wherein the order-picking control (50) comprises a pick-by-light order-picking guidance system (54, 58) which is configured to activate and deactivate each of the access locations (30) by means of an optical displaying device, and preferably to optically display the removal quantity (86).

4. The work station of one of the claims 1 to 3, wherein each of the window locations (24) is provided with a marking device for allowing calibration of the plurality of the window locations (24).

5. The work station of one of the claims 1 to 4, wherein the coding is chaotically.

6. The work station of claim 5, wherein the device (40) for allocating a free window location (24) comprises a code-reading unit.

7. The work station of claim 3, wherein the device (40) for allocating a free window location (24) comprises a confirmation button.

8. The work station of any one of claims 1 to 7, wherein the window conveyor (16) is driven continuously.

9. The work station of one of the claims 1 to 8, wherein the conveying means (20) is selected from at least one of a group comprising: a chord belt (22); a member belt; a tray sorter; and a chain.

10. The work station of one of the claims 1 to 9, wherein the window locations (24) are separated from each other by means of optical and/or physical elements (36) so that the order-picking person can distinguish same.

11. A storage and order-picking system (100) having at least one work station (10) in accordance with one of the preceding claims, wherein, preferably one single, window conveyor (16) is provided connecting, in terms of material flow, the picking zones (26) of the work stations (10).

12. The storage and order-picking system of claim 11, wherein each of the provision regions (28) comprises flow channels (32), wherein each removal end of each one of the flow channels (32) represents one of the access locations (30), wherein the flow channels (32) are filled in an automated manner with the piece goods (12) at their respectively opposing ends, preferably by one sort only and without load supports.

13. The storage and order-picking system (100) of claim 10 or 11, further comprising a sorting device (96) which is connected, in terms of material flow, to the at least one work station (10), and which is configured to distribute the piece goods (12), which have been placed on the window conveyor (16), to a plurality of destinations (98), wherein each of the destinations (98) is assigned to one picking order (80).

14. A method (150) for manually and paperlessly picking piece goods (12) in accordance with at least one order line (82) of an existing picking order (80) comprising the steps of:
allocating (154) the picking order (80) to an order-picking person (14) for processing the picking order (80) line by line;
communicating (156) one access location (30, 88) and one removal quantity (86) to the order-picking person (14) in accordance with one of the order lines (82) which is just to be processed;
the order-picking person (14) moves (158) to the communicated access location (30) and graps the removal quantity (82) of the piece goods (12) from the access location (30); **characterized in that**,
while the order-picking person (14) moves and/or grasps, but at the latest after the order-picking person (14) has grasped at least one first one of the piece goods (12) of the removal quantity (86), the order-picking person (14) selects (160) a free one of a plurality of window locations (24) of a window conveyor (16), which has not yet been occupied, wherein the window conveyor (16) extends through a picking zone (26) which is assigned to the order-picking person (14), wherein each of the window locations carries an unambiguous readable code (38);
informing (160) the order-picking control (50) on the selected window location (24); and
placing (162) the grasped piece good or piece goods (12) on the selected window location (24).

15. The method of claim 14, wherein each of the window locations (24) receives one piece good of the removal quantity (86) so that for each of the order lines respectively one free window location is allocated as dictated by the removal quantity.

16. The method of claim 14 or 15, wherein the steps of communicating (156), moving (158), grasping (158), selecting (160), informing (160) and placing (162) are repeated so many times until each one of the order lines of one picking order (80) has been picked.

17. The method of one of the claims 14 to 16, wherein the communicating (154) of the access location (30, 88) and the removal quantity (82), the information (160) on the selected window location (24) as well as, if necessary, the confirmation are performed acoustically, preferably by utilizing a pick-by-voice order-picking guidance system (56).

18. The method of one of the claims 14 to 17, wherein the communicating (154) of the access location (30, 88) and the removal quantity (86) is performed optically, preferably by utilizing a pick-by-light order-picking guidance systems (58).

19. The method of claim 18, wherein the selected window location (24) is signaled from a sensor to the order-picking control (50), the sensor monitoring the window conveyor (16) in the picking zone (26) and being configured to transmit a signal to the order-picking control (50) identifiying the window location (24) on which the order-picking person (14) has just placed one or more of the piece goods (12).

## Revendications

1. Poste de travail (10) pour la préparation de commande manuelle, stationnaire et sans documents d'articles (12) par un personnel de préparation (14), conformément à un ordre de préparation de commande (80), présentant :
un transporteur à fenêtres (16) qui présente un moyen de transport (20) qui présente une pluralité de postes de fenêtres (24) pouvant être limités optiquement les uns par rapport aux autres, chaque poste de fenêtre (24) comprenant une région définie fixement du moyen de transport (20) qui est adaptée pour recevoir au moins un article (12), le transporteur à fenêtres (16) passant par une zone de préparation de commande (26) qui est associée au personnel de préparation (14) ;
une région de préparation (28), dans laquelle différents types d'articles (12) sont fournis au niveau d'une pluralité de postes d'accès (30), la région de préparation (28) étant disposée par rapport au transporteur à fenêtres (16) de telle sorte que le personnel de préparation (14) puisse saisir à la main les articles (12) de chaque poste d'accès (30) et les placer sur le transporteur à fenêtres (16) ;
une commande de préparation de commande (50) qui commande une gestion des stocks et un déroulement des ordres (52, 64), pour communiquer des informations (90) au personnel de préparation (14) concernant un poste d'accès (88) et une quantité à enlever (86) conformément à une ligne d'ordre (82) de l'ordre de préparation (80) ; **caractérisé par**
un dispositif (40) pour attribuer un poste de fenêtre libre, non occupé (24), à la ligne d'ordre (82) par un choix et une saisie par le personnel de préparation (14), après que le personnel de préparation (14) a reçu la communication de la ligne d'ordre (82), le poste de fenêtre libre (24) étant occupé après l'attribution,
chaque poste de fenêtre (24) portant un code lisible univoque (38).

2. Poste de travail selon la revendication 1, dans lequel la commande de préparation de commande (50) présente un système de conduite de préparation de commande Pick-by-Voice (54, 58) qui est prévu pour communiquer par voie acoustique au personnel de préparation (14) le poste d'accès (30, 88) déterminé par la ligne d'ordre (82) et la quantité à enlever (86), et qui est prévu pour communiquer l'attribution du poste de fenêtre libre (24) par saisie vocale par le personnel de préparation (14) à la commande de préparation de commande (50).

3. Poste de travail selon la revendication 1 ou 2, dans lequel la commande de préparation de commande (50) présente un système de conduite de préparation de commande Pick-by-Voice (54, 58) qui est prévu pour activer et désactiver chacun des postes d'accès (30) au moyen d'une indication optique et de préférence pour indiquer optiquement la quantité à enlever (86).

4. Poste de travail selon l'une quelconque des revendications 1 à 3, dans lequel chacun des postes de fenêtres (24) est pourvu d'un marqueur afin de pouvoir effectuer une calibration de la pluralité des postes de fenêtres (24).

5. Poste de travail selon l'une quelconque des revendications 1 à 4, dans lequel le codage est chaotique.

6. Poste de travail selon la revendication 5, dans lequel le dispositif (40) pour attribuer un poste de fenêtre libre (24) présente une unité de lecture de code.

7. Poste de travail selon la revendication 3, dans lequel le dispositif (40) pour attribuer des postes de fenêtres libres (24) présente une touche d'acquittement.

8. Poste de travail selon l'une quelconque des revendications 1 à 7, dans lequel le transporteur à fenêtres (16) est entraîné en continu.

9. Poste de travail selon l'une quelconque des revendications 1 à 8, dans lequel le moyen de transport (20) est une transporteuse à courroie (22), une transporteuse à maillons, un trieur à plateaux ou une chaîne.

10. Poste de travail selon l'une quelconque des revendications 1 à 9, dans lequel les postes de fenêtres (24) sont séparés les uns des autres par des éléments optiques et/ou physiques (36) de manière visible pour le personnel de préparation.

11. Installation de stockage et de préparation de commande (100) comprenant au moins un poste de travail (10) selon l'une quelconque des revendications précédentes, un transporteur à fenêtres de préférence unique (16) étant prévu, lequel relie les unes aux autres par une technique de transport les zones de préparation de commande (26) des postes de travail (10).

12. Installation de stockage et de préparation de commande selon la revendication 11, dans laquelle chaque région de préparation (28) présente des canaux de passage (32), chaque extrémité d'enlèvement d'un canal de passage (32) constituant un poste d'accès (30), les canaux de passage (32) étant remplis de manière automatisée avec des articles (12) au niveau de leurs extrémités respectives opposées, de préférence sans triage et sans auxiliaire de stockage.

13. Installation de stockage et de préparation de commande (100) selon la revendication 10 ou 11, présentant en outre un trieur (96) qui se raccorde par une technique de transport à l'au moins un poste de travail (10) et qui est prévu pour distribuer des articles (12) déposés sur le transporteur à fenêtres (16) à une pluralité d'emplacement cibles (98), chaque emplacement cible (98) étant associé à un ordre de préparation de commande (80).

14. Procédé (150) pour la préparation de commande manuelle, sans documentes, d'articles (12) selon un ordre de préparation de commande (80) constitué d'au moins une ligne (82), comprenant les étapes suivantes :
attribution (154) de l'ordre de préparation de commande (80) à un personnel de préparation (14) pour exécuter par ligne l'ordre de préparation de commande (80) ;
communication (156) au personnel de préparation (14) d'un poste d'accès (30, 88) et d'une quantité à enlever (86) selon une ligne en cours de traitement (82) ;
déplacement (158) du personnel de préparation (14) jusqu'au poste d'accès communiqué (30) et saisie de la quantité à enlever (82) d'articles (12) du poste d'accès (30), **caractérisé en ce que**
pendant le déplacement et/ou la préhension, mais au plus tard après que le personnel de préparation (14) a saisi au moins un premier article (12) de la quantité à enlever (86), le personnel de préparation (14) sélectionne (160) un poste de fenêtre libre (24), pas encore occupé par des articles (12) à partir d'une pluralité de postes de fenêtres (24) d'un transporteur à fenêtres (16) qui passe par une zone de préparation de commande (26), laquelle est associée au personnel de préparation (14), chacun des postes de fenêtres (24) portant un code lisible univoque (38) ;
notification (160) du code du poste de fenêtre sélectionné (24) à la commande de préparation de commande (50) ; et
dépose (162) du ou des articles saisis (12) sur le poste de fenêtre sélectionné (24).

15. Procédé selon la revendication 14, dans lequel, un article de la quantité à enlever (86) est déposé pour chaque poste de fenêtre (24), de telle sorte que pour chaque ligne d'ordre, l'on affecte autant de postes de fenêtres libres que cela est prédéfini par la quantité à enlever.

16. Procédé selon la revendication 14 ou 15, dans lequel la communication (156), le déplacement (158), la préhension (158), la sélection (160), la notification (160) et la dépose (162) sont répétés jusqu'à ce que toutes les lignes d'un ordre (80) aient été traitées.

17. Procédé selon l'une quelconque des revendications 14 à 16, dans lequel la communication (154) du poste d'accès (30, 88) et de la quantité à enlever (82), la notification (160) du poste de fenêtres sélectionné (24) ainsi que, le cas échéant, la confirmation s'effectuent de manière acoustique, de préférence en utilisant un système de conduite de préparation de commande Pick-By-Voice (56).

18. Procédé selon l'une quelconque des revendications 14 à 17, dans lequel la communication (154) du poste d'accès (30, 88) et de la quantité à enlever (82) s'effectue optiquement, de préférence en utilisant un système de conduite de préparation de commande Pick-By-Light (58).

19. Procédé selon la revendication 18, dans lequel la commande de préparation de commande (50) reçoit le poste de fenêtre sélectionné (24) par le signal d'un capteur qui surveille le transporteur à fenêtres (16) dans la zone de préparation de commande (26) et qui est prévu pour transmettre à la commande de préparation de commande (50) un signal qui identifie le poste de fenêtre (24) dans lequel le personnel de préparation (14) a justement déposé un ou plusieurs articles (12).
